# DEMANDE DE BREVET EUROPEEN

(11) **EP 4 559 304 A1**
(43) Date de publication de la demande: **28.05.2025**
(21) Numéro de dépôt: 24212599.5
(22) Date de dépôt: 13.11.2024
(51) Int. Cl.: A01D 78/10, A01B 61/02, A01D 67/00, A01B 63/10

(54) **MACHINE AGRICOLE AVEC POINTS D'ATTELAGE ACTIFS**

(30) Priorité: 21.11.2023 FR 2312785
(71) Demandeur: Kuhn SAS, 67700 Saverne (FR)
(72) Inventeur: SPEICH, Cédric, 67270 ALTECKENDORF (FR)

(57) **Abrégé**

La présente invention concerne une machine agricole comportant au moins un outil de travail et un cadre d'attelage par lequel elle est reliée à un tracteur et qui comporte une traverse et deux leviers, chaque levier portant un tourillon respectif destiné à être attaché à un bras inférieur respectif du tracteur et pouvant se déplacer verticalement par rapport à la traverse, à chaque levier étant associé un dispositif de rappel pouvant exercer un effort sur le levier associé lorsque le tourillon respectif se déplace verticalement par rapport à la traverse, la machine pouvant occuper une configuration de travail dans laquelle le ou chaque outil est proche de la surface et au moins une configuration de transport, dans laquelle le ou chaque outil est plus éloigné de la surface qu'en configuration de travail, chaque dispositif de rappel comprend un vérin de rappel hydraulique fixé au levier respectif d'un côté et à la traverse d'un autre côté, chaque vérin de rappel étant hydrauliquement relié à un réservoir hydraulique en configuration de travail.

## Description

La présente invention concerne le domaine du machinisme agricole et plus particulièrement une machine agricole comportant au moins un outil de travail et un cadre d'attelage, par lequel elle est reliée à un tracteur et qui comporte une traverse et deux leviers, chaque levier portant un tourillon respectif destiné à être attaché à un bras inférieur respectif du tracteur et pouvant se déplacer verticalement par rapport à la traverse, à chaque levier étant associé un dispositif de rappel pouvant exercer un effort sur le levier associé, lorsque le tourillon respectif se déplace verticalement par rapport à la traverse, la machine pouvant occuper une configuration de travail dans laquelle le ou chaque outil est proche de la surface, et au moins une configuration de transport dans laquelle le ou chaque outil est plus éloigné de la surface qu'en configuration de travail.

Une telle machine est décrite dans le document EP 2 953 445 A1. Dans ce document, le dispositif de rappel comporte des éléments élastiquement déformables permettant d'emmagasiner et de restituer une énergie au tourillon associé, lorsque celui-ci se déplace verticalement. De tels dispositifs de rappel permettent de réduire les risques de basculement de la machine en configuration de transport, en emmagasinant un effort qu'ils restituent au(x) levier(s) pour le(s) ramener en position initiale. Dans la configuration de travail de la machine, les éléments élastiquement déformables de ces dispositifs de rappels transmettent aussi des efforts entre le tracteur et la machine, lorsqu'un tourillon est déplacé verticalement par rapport au cadre d'attelage de la machine, pouvant impliquer une durée de vie moindre du dispositif d'attelage du tracteur et du cadre d'attelage de la machine. En outre, les éléments élastiquement déformables impliquent également une amplitude limitée des débattements des tourillons, induisant une adaptation limitée de la machine à une surface bosselée, pouvant induire une moindre qualité de travail, mais aussi une détérioration des outils et/ou de la surface.

La présente invention a pour but de pallier au moins certains des inconvénients précités pour une telle machine agricole.

A cet effet, chaque dispositif de rappel comprend un vérin de rappel hydraulique fixé au levier respectif d'un côté et à la traverse d'un autre, chaque vérin de rappel étant hydrauliquement relié à un réservoir hydraulique en configuration de travail.

Grâce à ces dispositions, les mouvements de la machine par rapport au tracteur sont plus libres en configuration de travail, autorisant une meilleure adaptation de la machine sur une surface bosselée et réduisant avantageusement les contraintes dans le dispositif d'attelage du tracteur et dans le cadre d'attelage de la machine.

L'invention sera mieux comprise grâce à la description ci-après, qui se rapporte à différents modes de réalisation préférés, donnés à titre d'exemples non limitatifs, et expliqués avec référence aux dessins schématiques annexés, dans lesquels :
[Fig. 1] représente une vue de dessus simplifiée d'une machine selon une première variante de l'invention, attelée à l'arrière d'un tracteur, dans laquelle les vérins d'attelage sont masqués,
[Fig. 2] représente une vue en perspective d'un attelage selon le mode de réalisation préféré de l'invention,
[Fig. 3] représente une vue latérale d'une machine selon une variante préférée de l'invention, en configuration de travail,
[Fig. 4] représente une vue latérale simplifiée de la machine selon la variante préférée de l'invention, en configuration de transport ou de manoeuvre,
[Fig. 5] représente une schématisation du circuit hydraulique de la machine selon la variante préférée, le circuit hydraulique de la machine étant relié au circuit hydraulique du tracteur, et,
[Fig. 6] représente une vue en coupe latérale de l'attelage de la figure 2, l'emplacement de la coupe étant représenté sur la figure 1.

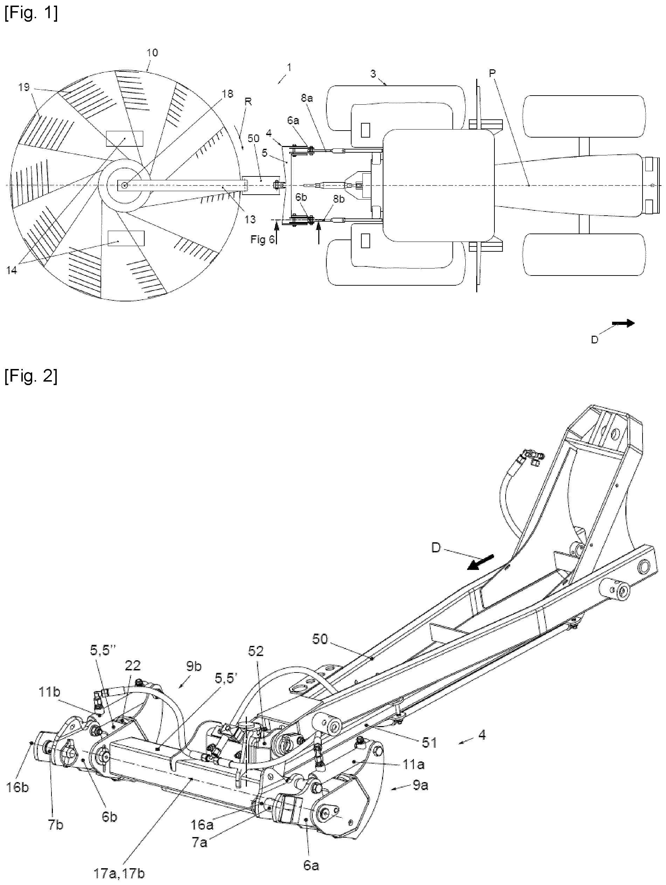

Telle que représentée sur la figure 1, la machine (1) agricole selon l'invention comporte au moins un outil (10). La machine (1) comporte aussi un cadre d'attelage (4) par lequel elle est reliée à un tracteur (3). Le tracteur (3) comprend deux bras inférieurs (8a, 8b). Le tracteur (3) est équipé d'un dispositif d'attelage comportant un bras inférieur gauche (8a) et un bras inférieur droit (8b). Le tracteur (3) est apte à se déplacer avec ou sans la machine (1) dans une direction principale (D). Le tracteur (3) se déplace sur une surface (S). Il s'agit de la surface (S) du sol sur laquelle le tracteur (3) et la machine (1) se déplacent, préférentiellement la surface (S) d'un champ lorsque la machine (1) est au travail. Le tracteur (3) permet également d'entraîner la machine (1), notamment grâce à sa prise de force et/ou son circuit hydraulique. Un plan central (P) passe par le milieu du tracteur (3). Le plan central (P) est vertical. Il est également parallèle à la direction principale (D). Le plan central (P) est à équidistance des bras inférieurs (8a, 8b).

Dans la présente description, les notions avant, arrière, devant, derrière, droite et gauche sont définies en regardant dans la direction principale (D).

La machine (1) comporte également au moins une poutre (13). La poutre (13) relie l'au moins un outil (10) au cadre d'attelage (4). De préférence, la poutre (13) relie l'au moins un outil (10) au cadre d'attelage (4) par le biais d'au moins un timonet (50). Le cadre d'attelage (4) est de préférence situé devant la poutre (13). Ainsi, la machine (1) est préférentiellement attelée au dispositif d'attelage arrière du tracteur (3). Dans un mode de réalisation non représenté, la machine (1) pourrait cependant être attelée au dispositif d'attelage avant du tracteur (3).

La machine (1) comporte un circuit hydraulique (40). Le tracteur (3) comprend également un circuit hydraulique (30). Le circuit hydraulique (30) du tracteur (3) comporte au moins un réservoir (33). Le réservoir (33) est atmosphérique. Autrement dit, le réservoir (33) est destiné à stocker un liquide sous une pression proche de la pression atmosphérique. Le circuit hydraulique (30) du tracteur (3) comporte aussi une pompe (31) et un distributeur (32) hydraulique. Le circuit hydraulique (30) du tracteur (3), et notamment la pompe (31) ou le réservoir (33), peu(ven)t être relié(s) au circuit hydraulique (40) de la machine (1) via le distributeur (32). La pompe (31) permet d'envoyer de l'huile sous pression dans les circuits hydrauliques (30, 40). La pompe (31), le réservoir (33) et/ou le distributeur (32) pourraient aussi faire partie du circuit hydraulique (40) de la machine (1).

Le cadre d'attelage (4) comporte une traverse (5) et deux leviers (6a, 6b). Chaque levier (6a, 6b) porte un tourillon (7a, 7b) respectif. Chaque tourillon (7a, 7b) est destiné à être attaché à un bras inférieur (8a, 8b) respectif du tracteur (3). Dans ce document, de nombreuses pièces sont symétriques par rapport au plan central (P). On convient de référencer ces pièces symétriques à gauche du plan central (P) par un a et celles à droite par un b. Ainsi, on convient de référencer un premier levier, le levier gauche (6a), et un deuxième levier le levier droit (6b). De la même manière, on convient aussi de nommer un premier tourillon, le tourillon gauche (7a) et un deuxième tourillon, le tourillon droit (7b) ...etc. Ainsi, le premier tourillon (7a) est attaché au bras inférieur gauche (8a) du dispositif d'attelage du tracteur (3) et le deuxième tourillon (7b) est attaché au bras inférieur droit (8b) du dispositif d'attelage du tracteur (3). La verticale est orthogonale à la direction principale (D) et à la droite passant par les tourillons (7a, 7b). La droite passant par les tourillons (7a, 7b) est préférentiellement horizontale.

De manière à autoriser une bonne adaptation de la machine (1) par rapport au tracteur (3) lors de leur déplacement sur une surface (S) bosselée, chaque tourillon (7a, 7b) peut se déplacer verticalement par rapport à la traverse (5). De plus, chaque tourillon (7a, 7b) est articulé avec le levier (6a, 6b) associé autour d'un axe d'attelage (16a, 16b). Chaque axe d'attelage (16a, 16b) est horizontal. Chaque axe d'attelage (16a, 16b) est également perpendiculaire à la direction principale (D).

Ainsi qu'il ressort particulièrement de la figure 2, un dispositif de rappel (9a, 9b) est associé à chaque levier (6a, 6b). Chaque dispositif de rappel (9a, 9b) peut exercer un effort sur le levier (6a, 6b) associé lorsque le tourillon (7a, 7b) respectif se déplace verticalement par rapport à la traverse (5).

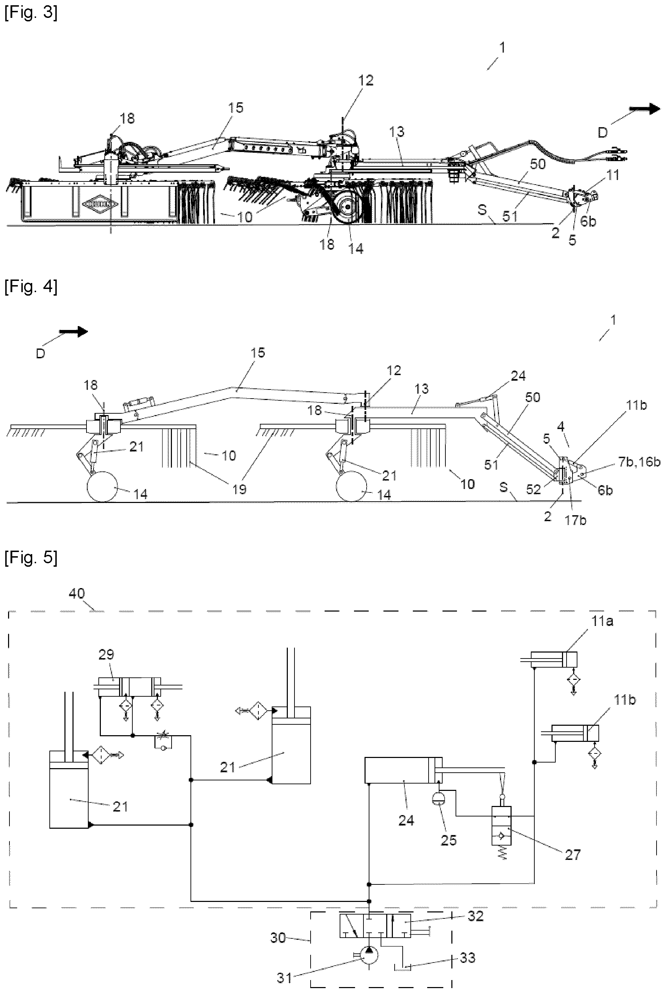

Dans la première variante de réalisation de la figure 1, l'outil (10) est attaché à l'extrémité arrière de la poutre (13). Dans la variante préférée de la figure 3, un outil (10) arrière est attaché à une poutre arrière (15). L'outil (10) avant est situé devant l'outil (10) arrière. La poutre arrière (15) est reliée à la poutre (13) par une articulation autorisant au moins un pivotement autour d'un axe central (12) sensiblement vertical. Ainsi que représentée sur cette figure 3, la machine (1) peut occuper une configuration de travail, dans laquelle le ou chaque outil (10) est proche de la surface (S). Telle que représentée sur la figure 4, la machine (1) peut également occuper une configuration de transport, dans laquelle le ou chaque outil (10) est plus éloigné de la surface (S) qu'en configuration de travail.

La machine (1) peut préférentiellement aussi occuper une configuration de manoeuvre, dans laquelle le ou chaque outil (10) est aussi éloigné de la surface (S). Dans la première variante de la figure 1, les configurations de manoeuvre et de transport sont sensiblement identiques. En configuration de travail, la poutre (13) est également plus proche de la surface (S) qu'en configuration de transport et de manoeuvre. La machine (1) repose sur la surface (S) par le biais de roulettes (14) et ce quelle que soit la configuration (travail, transport ou manoeuvre) de la machine (1). De préférence, à chaque outil (10) sont associées au moins deux roulettes (14) respectives. De préférence, les roulettes (14) sont orientées de manière que la poutre (13) soit sensiblement parallèle à la direction principale (D).

Selon une caractéristique importante de l'invention, chaque dispositif de rappel (9a, 9b) comprend un vérin de rappel (11a, 11b) hydraulique. Chaque vérin de rappel (11a, 11b) est fixé au levier (6a, 6b) respectif d'un côté et à la traverse (5) d'un autre côté. Respectivement, chaque vérin de rappel (11a, 11b) est solidaire du levier (6a, 6b) respectif par sa tige ou son cylindre. Chaque vérin de rappel (11a, 11b) est également solidaire de la traverse (5) par celui de sa tige ou de son cylindre qui n'est pas solidaire du levier (6a, 6b) respectif. Dans la configuration de travail, chaque vérin de rappel (11a, 11b) est hydrauliquement relié à un réservoir (33) hydraulique. Autrement dit, dans la configuration de travail, la pression dans les chambres de chaque vérin de rappel (11a, 11b) est sensiblement égale à la pression atmosphérique. On dit que les vérins de rappel (11a, 11b) sont montés flottant. De cette manière, l'allongement et/ou la rétractation de chaque vérin de rappel (11a, 11b) est libre en configuration de travail. Ainsi, les mouvements de la machine (1) sont plus libres en configuration de travail, améliorant sa capacité d'adaptation à une surface (S) bosselée et réduisant les contraintes dans le cadre d'attelage (4) et le dispositif d'attelage du tracteur (3) lors des déplacements de la machine (1) sur une surface (S) bosselée.

Tel qu'il ressort de la figure 4, le timonet (50) et une tringle (51) sont chacun articulé avec la poutre (13) suivant un axe horizontal respectif. Un adaptateur (52) est articulé avec au moins le timonet (50) autour d'un axe horizontal. Préférentiellement, l'adaptateur (52) est aussi articulé avec la tringle (51) autour d'un axe horizontal. L'adaptateur (52) est aussi articulé avec la traverse (5) suivant un axe de suivi (2) vertical, autorisant le timonet (50) et la poutre (13) à former un angle, en vue de dessus, avec la direction principale (D) lors de virages, évitant ou réduisant le ripage de la machine (1) sur la surface (S).

Il ressort de ce qui précède que le timonet (50), la tringle (51), la poutre (13) et l'adaptateur (52) forment un mécanisme à quatre barres. Ce mécanisme à quatre barres est préférentiellement un parallélogramme déformable, ce qui permet de conserver la même position du cadre d'attelage (4) dans les configurations de travail et de transport, même lorsque la machine (1) ne peut pas pivoter par rapport au tracteur (3) autour d'un axe horizontal tel que l'axe d'attelage (16a, 16b).

La traverse (5) relie les leviers (6a, 6b) au timonet (50). La traverse (5) s'étend ainsi transversalement à la direction principale (D). Préférentiellement, la traverse (5) s'étend perpendiculairement à la direction principale (D). La traverse (5) relie les leviers (6a, 6b) au timonet (50), préférentiellement par le biais de l'adaptateur (52), permettant à la machine (1) de mieux suivre la trajectoire du tracteur (3). Lorsque le tracteur (3) et la machine (1) se déplacent en ligne droite, le timonet (50) s'étend préférentiellement parallèlement à la direction principale (D).

La poutre (13) relie l'au moins un outil (10) avec le timonet (50). La poutre (13) est préférentiellement articulée avec le timonet (50) suivant un axe sensiblement horizontal, permettant d'écarter l'au moins un outil (10) de la surface (S) du sol dans la configuration de transport. Toujours à cet effet, le timonet (50) est également articulé avec la traverse (5) suivant un axe sensiblement horizontal. Préférentiellement, le timonet (50) est directement articulé avec l'adaptateur (52) suivant un axe sensiblement horizontal. De préférence, l'au moins un outil (10) est guidé en rotation avec la poutre (13) autour de l'axe d'entrainement (18) respectif. Lorsque le tracteur (3) et la machine (1) se déplacent en ligne droite, la poutre (13) s'étend préférentiellement parallèlement à la direction principale (D).

Ainsi que représenté sur la figure 4, à chaque outil (10) est associé un vérin élévateur (21). Le ou chaque vérin élévateur (21) permet de faire monter et descendre l'outil (10) auquel il est associé. Plus exactement, le ou chaque vérin élévateur (21) permet d'éloigner le ou chaque outil (10) de ses roulettes (14) respectives. Chaque vérin élévateur (21) est hydraulique. Du fait que le poids de la machine (1) peut permettre de l'abaisser entre sa configuration de manoeuvre et sa configuration de travail, le ou chaque vérin élévateur (21) est préférentiellement simple effet. Envoyer de l'huile sous pression au ou à chaque vérin élévateur (21) permet alors uniquement de faire monter l'outil (10) associé. Pour passer de la configuration de travail à la configuration de transport, le vérin élévateur (21) de chaque outil (10) est allongé. Dans le mode de réalisation préféré, le ou chaque vérin élévateur (21) est relié au même distributeur (32) que les vérins de rappel (11a, 11b).

Lorsque le tracteur (3) et la machine (1) se déplacent sur une surface plane, chaque vérin de rappel (11a, 11b) présente une longueur au repos définie. Préférentiellement, la longueur au repos des deux vérins de rappel (11a, 11b) est identique, de sorte que lorsque le tracteur (3) et la machine (1) se déplacent sur une surface plane, les axes d'attelage (16a, 16b) sont confondus. Lorsque le tracteur (3) et/ou la machine (1) se déplace(nt) sur une surface bosselée, la longueur d'au moins un vérin de rappel (11a, 11b) est modifiée du fait que les vérins de rappel (11a, 11b) sont montés flottant (reliés au réservoir (33) hydraulique) en configuration de travail.

Dans le mode de réalisation préféré, lorsque le tracteur (3) et la machine (1) sont sur une surface (S) plane, les vérins de rappel (11a, 11b) sont préférentiellement rétractés, et ce quelle que soit la configuration (travail, transport ou manoeuvre) de la machine (1). En effet, le poids de l'outil (10) avant, de la poutre (13) et/ou du cadre d'attelage (4) induit la rétractation des vérins de rappel (11a, 11b) sur une surface plane. La longueur au repos d'un vérin de rappel (11a, 11b) est ainsi sa longueur minimale.

Lorsqu'en configuration de travail, une roue arrière du tracteur (3) se trouve dans un trou, le vérin de rappel (11a, 11b) situé du côté de ladite roue arrière peut s'allonger. Si, à l'inverse, une roue arrière du tracteur (3) se trouve sur une butte, le vérin de rappel (11a, 11b) situé du côté opposé de ladite roue arrière s'allonge. Il ressort de ce qui précède, qu'autoriser l'allongement libre des deux vérins de rappel (11a, 11b) en configuration de travail permet de s'adapter à tout type d'inégalités de la surface (S), au moins sur une plage de débattement donnée. Selon une caractéristique intéressante, chaque vérin de rappel (11a, 11b) est ainsi un vérin simple effet, réduisant le nombre de conduites nécessaires et potentiellement de distributeurs hydrauliques pour faire fonctionner la machine (1), tout en permettant une bonne adaptation de la machine (1) sur une surface (S) bosselée. Dans un mode de réalisation alternatif non représenté, lorsque le tracteur (3) et la machine (1) sont sur une surface (S) plane, les pistons des vérins de rappel (11a, 11b) pourraient cependant aussi se trouver à mi-course ou les vérins de rappel allongés.

Telle que représentée sur les figures 1, 3 et 4, la machine (1) est de préférence trainée. La machine (1) est préférentiellement un andaineur trainé. Sur ces figures, le ou chaque outil (10) est un rotor doté de doigts (19) de ratissage. En configuration de travail, le ou chaque outil (10) peut être entrainé en rotation suivant un sens de rotation (R), afin que les doigts (19) déplacent du produit gisant sur la surface (S). Le produit est préférentiellement végétal, tel que de l'herbe coupée ou de la paille coupée. Dans les variantes représentées, chaque outil (10) est entrainé en rotation autour d'un axe d'entrainement (18) respectif sensiblement vertical, au moins en configuration de travail. Un chemin de came permet de guider l'orientation des doigts (19) en fonction de leur position autour de l'axe d'entrainement (18), de sorte que lorsque l'outil (10) est entrainé autour de son axe d'entrainement (18), les doigts (19) pivotent suivant un axe horizontal. Afin de ratisser le produit situé à l'avant de chaque outil (10), les doigts (19) sont sensiblement verticaux lorsqu'ils sont situés devant l'axe d'entrainement (18). Afin de déplacer le produit latéralement, les pointes des doigts (19) sont préférentiellement éloignées de la surface (S) lorsque les doigts (19) pivotent suivant un axe horizontal. Alternativement, la machine (1) pourrait être un faneur ou une faucheuse trainé(e).

Dans la variante préférée des figures 3 et 4, afin de réduire la largeur de la machine (1) en configuration de transport, l'axe d'entrainement (18) de l'outil (10) arrière est sensiblement aligné avec l'axe d'entrainement (18) de l'outil (10) avant en configuration de transport et vu suivant la direction principale (D). Dans la variante préférée des figures 3 et 4, en configuration de travail et de manoeuvre, l'axe d'entrainement (18) de l'outil (10) arrière est décalé par rapport à l'axe d'entrainement (18) de l'outil (10) avant, en vue suivant la direction principale (D). Dans cette variante préférée, en configuration de travail, le produit ratissé par l'outil (10) avant est à nouveau ratissé par l'outil (10) arrière, qui forme un andain commun. Dans la variante préférée, les doigts (19) des outils (10) avant et arrière sont entrainés dans le même sens de rotation et les doigts (19) situés à l'avant des outils (10) sont entrainés en direction du côté de l'outil (10) arrière, vu suivant la direction principale, augmentant ainsi la largeur de travail de la machine (1).

Ainsi qu'il ressort de la figure 5, la machine (1) comporte au moins un accumulateur (25) hydropneumatique. Précisément, le circuit hydraulique (40) de la machine (1) comporte au moins un accumulateur (25). Tel que représenté sur la figure 5, en configuration de transport, le circuit hydraulique (40) de la machine (1) est isolé du circuit hydraulique (30) du tracteur (3).

Tel qu'illustré sur la figure 5, l'accumulateur (25) est configuré pour être hydrauliquement relié aux vérins de rappel (11a, 11b) en configuration de transport de la machine (1). De préférence, le circuit hydraulique (40) de la machine (1) est tel que l'accumulateur (25) est hydrauliquement relié aux vérins de rappel (11a, 11b) en configuration de transport et de manoeuvre de la machine (1). Ainsi, chaque vérin de rappel (11a, 11b) exerce un effort sur le levier (6a, 6b) associé lorsque le tourillon (7a, 7b) respectif se déplace verticalement par rapport à la traverse (5). Dans le mode de réalisation préféré, chaque vérin de rappel (11a, 11b) exerce un effort sur le levier (6a, 6b) associé lorsque le tourillon (7a, 7b) respectif se déplace vers le bas par rapport à la traverse (5). Préférentiellement, dans la configuration de transport, chaque dispositif de rappel (9a, 9b), respectivement chaque vérin de rappel (11a, 11b), est configuré pour exercer un effort vers le haut sur le tourillon (7a, 7b) respectif lorsque ledit tourillon (7a, 7b) se déplace vers le bas par rapport à la traverse (5). Également dans la configuration de manoeuvre, chaque dispositif de rappel (9a, 9b), respectivement chaque vérin de rappel (11a, 11b), est configuré pour exercer un effort vers le haut sur le tourillon (7a, 7b) respectif lorsque ledit tourillon (7a, 7b) se déplace vers le bas par rapport à la traverse (5). Ainsi, les mouvements des leviers (6a, 6b) sont bloqués, respectivement entravés, améliorant la tenue de route de la machine (1) et évitant avantageusement qu'elle ne bascule, notamment lors de virages. Il est souligné qu'en configurations de transport et de manoeuvre, le centre de gravité de la machine (1) est situé plus haut qu'en configuration de travail, du fait qu'en configuration de travail le ou chaque outil (10) est plus proche de la surface (S), rendant ainsi la stabilité de la machine (1) particulièrement importante dans les configurations de transport et de manoeuvre. En outre, l'accumulateur (25) est configuré pour maintenir les vérins de rappel (11a, 11b) à leur longueur au repos en configurations de transport et de manoeuvre. De préférence, l'accumulateur (25) est configuré pour exercer un effort maintenant les vérins de rappel (11a, 11b) rétractés en configuration de transport et en configuration de manoeuvre.

Il ressort de la figure 4 qu'un vérin central (24) relie la poutre (13) d'une part et l'un d'entre le timonet (50) et la tringle (51) d'autre part. Lorsque le vérin central (24) est actionné, il permet de soulever la poutre (13) de manière sensiblement horizontale. Préférentiellement, le vérin central (24) relie la poutre (13) et le timonet (50). Plus préférentiellement encore, une bielle est articulée avec le timonet (50) et le vérin central (24).

Ainsi qu'il ressort de la figure 2, dans le mode de réalisation préféré, chaque levier (6a, 6b) est monté pivotant avec la traverse (5) autour d'un axe transversal (17a, 17b) respectif. Alternativement ou additionnellement, chaque levier (6a, 6b) pourrait coulisser par rapport à la traverse (5), notamment suivant un trou oblong présentant une composante verticale. Une liaison coulissante induit cependant souvent plus d'usure qu'une liaison pivot et complexifie globalement la cinématique. Ainsi, de manière simple et économique, la liaison entre chaque levier (6a, 6b) et la traverse (5) est donc réalisée uniquement par un pivot. De préférence, le déplacement vertical de chaque tourillon (7a, 7b) est réalisé par pivotement autour de l'axe transversal (17a, 17b) respectif, engendrant moins d'usure prématurée. Ainsi, chaque vérin de rappel (11a, 11b) exerce un effort sur le levier (6a, 6b) associé lorsque le tourillon (7a, 7b) respectif pivote vers le bas par rapport à la traverse (5). De manière équilibrée, simple et économique, les axes transversaux (17a, 17b) sont préférentiellement confondus.

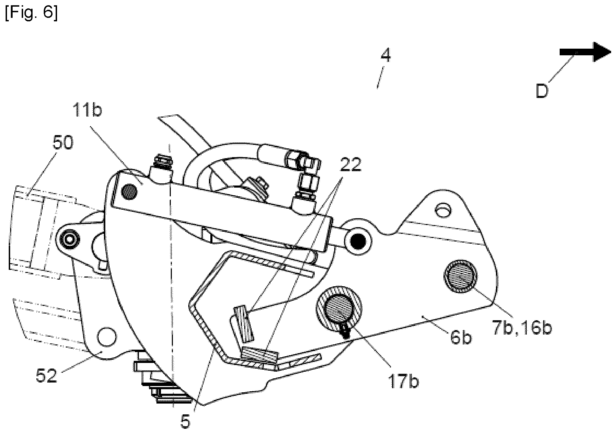

Ainsi qu'il ressort de la figure 6, il peut être prévu entre la traverse (5) et chaque levier (6a, 6b) au moins un patin (22). De préférence, deux patins (22) sont fixés à chaque levier (6a, 6b) afin d'amortir de potentiels chocs entre leviers (6a, 6b) et traverse (5). Les patins (22) sont préférentiellement réalisés en matière flexible tel que du caoutchouc ou de l'élastomère. De tels patins (22) permettent d'améliorer le confort de l'utilisateur ou du conducteur. Alternativement ou additionnellement, un patin (22) flexible pourrait être monté à l'extrémité intérieure du cylindre de chaque vérin de rappel (11a, 11b).

De préférence, le distributeur (32) est relié au moins au vérin central (24), aux vérins élévateurs (21) et aux vérins de rappels (11a, 11b), réduisant ainsi le nombre de distributeurs hydrauliques nécessaires à l'actionnement de la machine (1). En outre, le vérin central (24) et chacun des vérins élévateurs (21) sont simple effet, réduisant le cout de revient de la machine (1) et sa complexité. Comme il a été décrit précédemment, dans la configuration de travail de la machine (1), le distributeur (32), dans une position flottante, permet de relier les vérins de rappel (11a, 11b) au réservoir (33). Dans la configuration de travail de la machine (1), le distributeur (32) est préférentiellement placé dans une position flottante dans laquelle il relie constamment les vérins de rappels (11a, 11b) au réservoir (33), permettant que la longueur de chaque vérin de rappel (11a, 11b) s'adapte à la configuration de la surface (S) du sol, réduisant les contraintes dans le cadre d'attelage (4) et le dispositif d'attelage du tracteur (3) lors des déplacements de la machine (1) sur une surface (S) bosselée. En position flottante, le distributeur (32) relie donc au moins le vérin central (24), le ou les vérin(s) élévateur(s) (21) et les vérins de rappels (11a, 11b) au réservoir (33).

Le distributeur (32) peut également occuper une configuration passante, dans laquelle il relie au moins les vérins de rappel (11a, 11b) à la pompe (31). En configuration passante du distributeur (32), le vérin central (24), les vérins élévateur(s) (21) et de rappels (11a, 11b) sont reliés à la pompe (31), éloignant ainsi le ou les outils (10) de la surface. Respectivement, pour transposer la machine (1) depuis sa configuration de travail dans sa configuration de manoeuvre, le distributeur (32) est placé en configuration passante. Dans la première variante, la configuration de manoeuvre correspond à la configuration de transport.

En configuration de transport, le distributeur (32) empêche la rétractation du ou de chaque vérin élévateur (21), de sorte que le ou chaque outil (10) est maintenu plus éloigné de la surface (S) qu'en configuration de travail. En configuration de manoeuvre aussi, le distributeur (32) empêche la rétractation du ou de chaque vérin élévateur (21). Préférentiellement, le distributeur (32) empêche toute circulation d'huile entre le circuit hydraulique (30) du tracteur (3) et le circuit hydraulique (40) de la machine (1).

Dans la variante préférée de la figure 3, pour transposer la machine (1) depuis sa configuration de manoeuvre dans sa configuration de transport, un vérin supplémentaire (29) permet de déplacer l'outil (10) arrière derrière l'outil (10) avant, afin de réduire la largeur de la machine (1). Respectivement, le vérin supplémentaire (29) permet de déplacer l'axe d'entrainement (18) de l'outil (10) arrière derrière l'axe d'entrainement (18) de l'outil (10) avant. Dans cette variante, le distributeur (32) est relié à la fois au vérin central (24), aux vérins élévateurs (21), aux vérins de rappels (11a, 11b) et au vérin supplémentaire (29).

Du fait que le poids de la machine (1) permet au vérin central (24), aux vérins élévateurs (21) et aux vérins de rappels (11a, 11b) de se rétracter pour transposer la machine (1) depuis sa configuration de transport ou manoeuvre dans sa configuration de travail, le distributeur (32) est placé en configuration flottante.

La machine (1) peut comporter une valve de distribution (27) qui détecte lorsque la machine (1) est en configuration de transport. Telle que représentée sur la figure 5, la valve de distribution (27) détecte lorsque le vérin central (24) est allongé. Lorsque la valve de distribution (27) détecte que la machine (1) est en configuration de transport, les vérins de rappel (11a, 11b) sont reliés à l'accumulateur (25). Plus précisément, lorsque la valve de distribution (27) détecte que la machine (1) est en configuration de transport, elle relie les vérins de rappel (11a, 11b) à l'accumulateur (25). Ainsi, la valve de distribution (27) peut être un distributeur 2-2 avec une position bloquante dans au moins un sens et une configuration passante. Dans la configuration de travail de la machine (1), la valve de distribution (27) est en position bloquante. Grâce à cette valve de distribution, l'utilisateur évite une action supplémentaire et ne peut avantageusement pas oublier de relier les vérins de rappel (11a, 11b) au réservoir (33) ou à l'accumulateur (25).

En configuration de travail, l'accumulateur (25) n'est pas relié aux vérins de rappel (11a, 11b). Par contre, au moins lors de la transposition de la machine entre sa configuration de transport ou manoeuvre et sa configuration de travail, l'accumulateur (25) est hydrauliquement relié au moins au vérin central (24), de préférence de telle manière que le vérin central (24) exerce un effort maintenant la poutre (13) vers le bas, assurant ainsi que l'outil (10) (avant) atteigne sa position en configuration de travail, respectivement que l'outil (10) (avant) soit proche de la surface (S), améliorant ainsi la qualité de travail de la machine (1). Grâce à cette construction hydraulique, l'accumulateur (25) permet de remplir une première fonction pour atteindre la configuration de travail et une deuxième fonction en configuration de transport (et de manoeuvre), réduisant avantageusement le nombre d'accumulateurs (25) nécessaires à la machine (1), et donc son coût de revient. Préférentiellement, en configuration de travail, le vérin central (24), les vérins élévateurs (21), les vérins de rappels (11a, 11b) et le vérin supplémentaire (29) sont rétractés.

L'invention porte également sur un convoi agricole composé d'un tracteur (3) et d'une machine (1).

L'invention n'est pas limitée au(x) mode et variantes de réalisation décrit(es) et représenté(es) sur les figures. Des modifications restent possibles du point de vue de la constitution des divers éléments ou par substitution d'équivalents techniques, sans sortir du domaine de protection de l'invention.

## Revendications

1. Machine (1) agricole comportant au moins un outil (10)
de travail et un cadre d'attelage (4) par lequel elle est reliée à un tracteur (3), le cadre d'attelage (4) comportant une traverse (5) et deux leviers (6a, 6b), chacun portant un tourillon (7a, 7b) respectif destiné à être attaché à un bras inférieur (8a, 8b) respectif du tracteur (3) et pouvant se déplacer verticalement par rapport à la traverse (5), à chaque levier (6a, 6b) étant associé un dispositif de rappel (9a, 9b) pouvant exercer un effort sur le levier (6a, 6b) associé lorsque le tourillon (7a, 7b) respectif se déplace verticalement par rapport à la traverse (5), la machine (1) pouvant occuper une configuration de travail dans laquelle le ou chaque outil (10) est proche de la surface (S) et au moins une configuration de transport, dans laquelle le ou chaque outil (10) est plus éloigné de la surface (S) qu'en configuration de travail,
machine (1) **caractérisée en ce que** chaque dispositif de rappel (9a, 9b) comprend un vérin de rappel (11a, 11b) hydraulique fixé au levier (6a, 6b) respectif d'un côté et à la traverse (5) d'un autre côté, chaque vérin de rappel (11a, 11b) étant hydrauliquement relié à un réservoir (33) hydraulique en configuration de travail.

2. Machine selon la revendication 1, **caractérisée en ce que** chaque vérin de rappel (11a, 11b) est un vérin simple effet et **en ce que** lorsque le tracteur (3) et la machine (1) sont sur une surface (S) plane, les vérins de rappel (11a, 11b) sont rétractés.

3. Machine selon l'une des revendications 1 ou 2, **caractérisée en ce que**, dans la configuration de travail, la pression des chambres de chaque vérin de rappel (11a, 11b) est sensiblement égale à la pression atmosphérique.

4. Machine selon l'une des revendications 1 ou 2, **caractérisée en ce qu'**elle comporte un accumulateur (25) hydropneumatique configuré pour être hydrauliquement relié aux vérins de rappel (11a, 11b) en configuration de transport de la machine (1).

5. Machine selon l'une quelconque des revendications 1 à 3, **caractérisée en ce que** chaque levier (6a, 6b) est monté pivotant avec la traverse (5) autour d'un axe transversal (17a, 17b) respectif.

6. Machine selon l'une quelconque des revendications 1 à 4, **caractérisée en ce que** dans la configuration de transport, chaque dispositif de rappel (9a, 9b) est configuré pour exercer un effort vers le haut sur le tourillon (7a, 7b) respectif lorsque ledit tourillon (7a, 7b) se déplace vers le bas par rapport à la traverse (5).

7. Machine selon l'une quelconque des revendications 1 à 4, **caractérisée en ce que** deux patins (22) sont fixés à chaque levier (6a, 6b), afin d'amortir de potentiels chocs entre les leviers (6a, 6b) et la traverse (5).

8. Machine selon l'une quelconque des revendications 1 à 5, **caractérisée en ce qu'**elle comporte une poutre (13) reliant l'au moins un outil (10) au cadre d'attelage (4) par le biais d'un timonet (50), un vérin central (24) reliant la poutre (13) et le timonet (50), **en ce qu'**à chaque outil (10) est associé un vérin élévateur (21) permettant de faire monter et descendre l'outil (10) associé, et **en ce qu'**un distributeur (32) hydraulique est relié au moins au vérin central (24), aux vérins élévateurs (21) et aux vérins de rappel (11a, 11b).

9. Machine selon la revendication 6, **caractérisée en ce que** le vérin central (24) et chacun des vérins élévateurs (21) sont simple effet.

10. Machine selon la revendication 3 et l'une quelconque des revendications 4 à 7, **caractérisée en ce qu'**elle comporte une valve de distribution (27) détectant lorsque la machine (1) est en configuration de transport et reliant l'accumulateur (25) aux vérins de rappel (11a, 11b) lorsque la machine (1) est en configuration de transport.

11. Machine selon la revendication 3 et l'une quelconque des revendications 4 à 8, **caractérisée en ce que**, lors de la transposition de la machine (1) entre sa configuration de transport et sa configuration de travail, l'accumulateur (25) est hydrauliquement relié au moins au vérin central (24), de telle manière que le vérin central (24) exerce un effort maintenant la poutre (13) vers le bas.

12. Machine selon l'une quelconque des revendications 1 à 9, **caractérisée en ce que** le ou chaque outil (10) est un rotor doté de doigts (19) de ratissage et pouvant être entrainé en rotation suivant un sens de rotation (R), afin que les doigts (19) déplacent le produit gisant sur la surface (S).
